(19) **Europäisches Patentamt / European Patent Office / Office européen des brevets**

(11) **EP 1 620 470 B1**

(12) # EUROPEAN PATENT SPECIFICATION

(45) Date of publication and mention of the grant of the patent:
**01.07.2009 Bulletin 2009/27**

(51) Int Cl.:
*C08B 37/00* (2006.01)  *A23L 1/10* (2006.01)
*A23L 1/308* (2006.01)

(21) Application number: **04731384.6**

(86) International application number:
**PCT/FI2004/000274**

(22) Date of filing: **06.05.2004**

(87) International publication number:
**WO 2004/099257 (18.11.2004 Gazette 2004/47)**

(54) **METHOD FOR THE TREATMENT OF VEGETABLE MATERIAL**

VERFAHREN ZUR BEHANDLUNG VON PFLANZENMATERIAL

PROCEDE POUR TRAITER UNE MATIERE VEGETALE

(84) Designated Contracting States:
**AT BE BG CH CY CZ DE DK EE ES FI FR GB GR HU IE IT LI LU MC NL PL PT RO SE SI SK TR**

(30) Priority: **07.05.2003  FI 20030683**

(43) Date of publication of application:
**01.02.2006  Bulletin 2006/05**

(73) Proprietor: **Ravintoraisio Oy**
**21200 Raisio (FI)**

(72) Inventors:
• **HAAPIAINEN, Jenni**
 **FI-26100 Rauma (FI)**
• **MYLLYMÄKI, Olavi**
 **FI-02210 Espoo (FI)**
• **LEHTINEN, Pekka**
 **FI-02880 Veikkola (FI)**

• **LEHTOMÄKI, Ilkka**
 **FI- 00990  Helsinki (FI)**
• **LAAKSO, Simo**
 **FI-20380 Turku (FI)**
• **PATAJOKI, Markku**
 **FI-00650 Helsinki (FI)**

(74) Representative: **Saijonmaa, Olli-Pekka**
 **Berggren Oy Ab,**
 **P.O. Box 16**
 **00101 Helsinki (FI)**

(56) References cited:
**EP-A2- 0 377 530**          **WO-A1-95/00027**
**WO-A2-20/04091314**      **GB-A- 1 417 436**
**US-A- 5 552 175**          **US-A- 6 060 519**
**US-B1- 6 210 741**

EP 1 620 470 B1

# EP 1 620 470 B1

**Description**

The invention relates to a method for treating a vegetable material in order to achieve improved solubility of non-starch polysaccharides contained in the material.

Vegetable materials contain various non-starch polysaccharides, which generate viscosity when dissolved in water. When used in human diets, these compounds have been stated to have a health-promoting effect composed of several factors. Unlike starch, these polysaccharides do not decompose in the upper part of the digestive tract, but pass unabsorbed all the way to the large intestine. Non-starch polysaccharides have proved to cause a feeling of fullness and are thus useful in weight control (Howarth N C; Saltzman E; Roberts S B, Dietary fiber and weight regulation. Nutrition Reviews, 2001, 59(5), pages 129-139. Non-starch polysaccharides have also proved to retard carbohydrate absorption, so that blood sugar values will rise slower after meals if the food contains non-starch polysaccharides (Wood, Peter J. Evaluation of oat bran as a soluble fiber source. Characterization of oat b-glucan and its effects on glycemic response. Carbohydrate Polymers, 1994, 25(4), pages 331-336. Especially water-soluble non-starch polysaccharides have proved to lower the blood serum LDL cholesterol level and thus to reduce the risk of contracting cardiovascular diseases (Braaten J T; Wood P J; Scott F W; Wolynetz M S; Lowe M K; Bradley-White P; Collins M W, Oat beta-glucan reduces blood cholesterol concentration in hypercholesterolemic subjects. European Journal Of Clinical Nutrition, 1994, 48(7), pages 465-474). In addition, the bacteria in the large intestine form disintegration products of non-starch polysaccharides, and these disintegration products have a beneficial effect in the prevention of some forms of cancer (Reddy, Bandaru S.; Hirose, Yoshinobu; Cohen, Leonard A.; Simi, Barbara; Cooma, Indrane; Rao, Chinthalapally V., Preventive potential of wheat bran fractions against experimental colon carcinogenesis: implications for human colon cancer prevention. Cancer Research, 2000, 60(17), pages 4792-4797).

Thus many of the health effects described above depend on the water solubility of non-starch polysaccharides. The paper "Effects of oat gum on blood cholesterol levels in healthy young men" (European Journal Of Clinical Nutrition, 1995, 49(7), pages 517-522) Beer et al. indicated that high water solubility and high viscosity increase the capacity of oat products to lower the serum cholesterol level.

The solubility of non-starch polysaccharides from vegetable source materials into water is determined by the chemical and physical properties of the material. Such properties consist of crosslinks between different molecules, the hydrophobicity or the particle size of the material. Prior art includes enhancing the solubility of non-starch polysaccharides in such materials by changing the pH of the aqueous phase (US5518710, Methods for extracting cereal beta -glucans), by raising the temperature (Zhang, Decai; Doehlert, Douglas C.; Moore, Wayne R., Factors affecting viscosity of slurries of oat groat flours. Cereal Chemistry, 1997, 74(6), pages 722-726), by milling the material to a smaller particle size (Wood, P. J.; Siddiqui, I. R.; Paton, D. Extraction of high-viscosity gums from oats. Cereal Chemistry, 1978, 55(6), pages 1038-1049) and by adding various hydrolytic enzymes to the material (US5846590, Method for enriching soluble dietary fibre).

US 6 060 519 describes production of cereal hydrocolloidal compositions from grain. The cellular structure of fibrous grain material is broken down, so that it can be separated into liquid and solid portions. Mechanical treatment in an aqueous medium is followed by sieving, to produce a colloidal fraction containing dissolved β-glucan.

US 5 552 175 describes processing of an α-glucan containing foodstuff in order to solubilise the starch content of the material. The material is milled to a particle size of below 200 $\mu$m to liberate of the starch from the cellular structures, in which it is contained. The goal is to produce a food drink with a low viscosity.

EP 0 377 530 A2 describes homogenization of grain by wet grinding, followed by screening at two phases to yield a product fraction in the particle size range of 40 to 2000 $\mu$m. The material is used as food or food raw material or additive.

An alkaline pH is known to increase the solubility of polysaccharides, and the same is true for treatments at low temperatures. However, three techniques are not applicable to food production without entailing significant negative alterations of the sensory characteristics of the product. The use of various hydrolytic enzymes with a view to increase solubility incurs additional costs and also involves consideration of legal restrictions and any acceptance procedures caused by the restrictions.

However, the pre-treatments mentioned above have a minor impact at the most on efforts to increase the solubility of non-starch polysaccharides from prepared foodstuffs in the digestive tract. Dissolution is primarily controlled by local pH variations in the digestive tract and the food digesting enzymes secreted into the tract.

Milling the material to a smaller particle size is known to promote the solubility of the components of the material into the surrounding aqueous phase. However, the benefit obtained by fine milling depends on the compound to be dissolved and on the material to be ground. Thus, for instance, milling does not yield any substantial benefits with regard to the solubility of non-starch polysaccharides derived from corn. Corn grains have large endosperm cells, those of e.g. oat being in the range from 400 to 800 $\mu$m, whereas the major portion of finest particles obtained by milling is of the order of 100 to 300 $\mu$m. Consequently, primarily endosperm cells will be crushed during milling, resulting in the released starch forming the finest portion of the flour. Accordingly, the cells of the aleuron and subaleuron layer, having the largest proportion of non-starch polysaccharides, are substantially smaller, of the order of 10 to 30 μm in oat, for instance. During milling, these cells have a tendency to remain uncrushed, forming typically clusters of several cells, in which the non-starch polysaccharides cannot freely contact the surrounding dissolving phase. Hence it is also obvious that efforts to reduce the particle size by screening the flour only results in even larger starch proportions.

Known milling techniques have the drawback of difficult crushing to an adequate size of grain cell structures having the largest proportion of non-starch polysaccharides. As a result, mainly the non-starch polysaccharides located on the fracture surfaces of the particles getting into immediate contact with the dissolving medium, such as water.

The purpose of the present invention is to improve the solubility of non-starch polysaccharides with a treatment allowing elimination of the drawbacks and limitations of the techniques mentioned above. The invention comprises a method for treating a vegetable material formed by all of the grains of oat, rye or barley or an oat bran concentrate, with a view of improving the solubility of the non-starch polysaccharide β-glucan or pentosan contained in the material. The method is characterised in that the material is crushed by extrusion with use of mechanical energy in an amount of 0.15 to 0.39 kWh/kg to a particle size less than 100 μm, at least a major portion of the cells containing non-starch polysaccharide in the material being damaged during crushing, to produce particles with an improved solubility of β-glucan or pentosan and a capacity to generate viscosity as the product is contacted with an aqueous phase.

Consequently, it is true for the invention that more than 50%, preferably more than 90% of said cells in the material are split, cleaved or broken during crushing, so that the non-starch polysaccharides contained in the cells are released into contact with the dissolving mediums, such as water or aqueous solutions with which the crushed product is contacted.

The cell damage of the invention allows for increased interaction between the dissolving medium, such as the aqueous phase, and non-starch polysaccharides within the cells and also outside the cells, resulting in increased solubility. This appears chiefly as accelerated dissolution, but also as an increased amount of soluble material in applications of the invention.

Crushing is preferably performed so that at least a major portion of the non-starch polysaccharides contained in the cells end up in particles as produced by the crushing with a particle size smaller than that of the respective initial cell of the non-starch polysaccharide. This applies to more than 50%, preferably more than 80% of the non-starch polysaccharides contained in the cells of the material. In the ideal case, the cells are split to substantially 100%.

In accordance with the invention, the vegetable material can be crushed to a smaller particles than what has been attained so far by known milling techniques. The material to be crushed, which may form all of the cereal grains, oat, rye or barley or an oat bran concentrate, is crushed to a particle size under 100 μm, preferably under 50 μm and most advantageously under 20 μm. The preferred particle size is smaller than the size of the cells of the material to be crushed, so that even the smallest cell structures are broken and the effective concentration of components to be dissolved within the cells increases relative to the dissolving medium and solubility is enhanced.

When the product obtained in accordance with the invention is used in industrial production processes, the non-starch polysaccharides contained in the product are rapidly dissolved, generating viscosity. Enhanced viscosity can be utilised during the intake of a product prepared in accordance with the invention as such or as part of the food, yielding better conditions for dissolution of non-starch polysaccharides in the digestive tract. The invention has two preferred effects on the solubility of non-starch polysaccharides: the particle area relative to water increases as the particle size decreases and the compound used as a solvent is in immediate contact with intercellular structures.

The solubility of the product can also be controlled by means of an appropriate dissolution-retarding component, such as amylopectin. The vegetable material to be crushed can contain in itself amylopectin in addition to non-starch polysaccharides, e.g. waxy rice or waxy barley, or then amylopectin or an additive containing it can be mixed with the vegetable material before or after crushing.

A typical non-starch polysaccharide of nutritional interest is β-glucan, which occurs e.g. in the cell walls of cereal grains and as an integrated part of the cell wall structure in yeast. Thus the invention is particularly suitable for use in order to improve the solubility of β-glucan. The invention is also advantageous in the treatment of materials containing pentosan.

The effect of the invention on the product is achieved by subjecting the material used for its production to mechanical energy in a sufficient amount for the particle size to become smaller than that of the material cells containing Non-starch polysaccharides. In fact, the size of the cells to be crushed may vary considerably depending on the material. Hence the effect of the invention on the product is not bound to any universal particle size value, but may vary from one material to another depending on the size of the cells to be crushed. Regarding oat grains, it is known (Oats Chemistry And Technology, Editor Francis H. Webster, American Association of Cereal Chemists, Eagan Press, 1986), that the cell size may vary notably also in different parts of the grain. Endosperm cells typically have a size in the range from 50-150 μm, whereas aleuron and subaleuron cells rich in non-starch polysaccharides have a size in the range from 10-30 μm. The effective action of the invention is thus produced by subjecting corns to mechanical energy in an amount by which the cereal material, including aleuron and/or subaleuron layers, is crushed to a size primarily less than 50 μm, preferably less than 20 μm.

The invention is not bound to any specific embodiment, the desired property of the product being obtained by the joint effect of heat, pressure and shearing forces, in extrusion at a low moisture content. Thus the invention has simple implementation, is apt for large-scale industrial production and does not incur notable extra costs relative to its utility when taken into use.

The invention is advantageously implemented by extrusion when it is desirable to perform formulation of the product simultaneously. The amount of energy used for extrusion is in the range 0.15-0.39 kWh/kg of material. The plastic mass formed during extrusion, in which the original material has been crushed to the particle size of the invention, can be formulated after drying to the desired grain size and shape. The product of the invention is most advantageously obtained by first regulating the moisture of the material to be extruded to a value of 6% or 20% at the most. Extrusion is applied also when it is desirable to control the dissolution rate of the non-starch polysaccharides. A selective effect on the solubility of non-starch polysaccharides in processes, food preparation and in the digestive tract is attained by mixing compounds with the material to be extruded, such as different starch preparations, whose solubility depends on the time, the pH, the mechanical or enzymatic effect.

The method according to the invention can yield products, in which the non-starch polysaccharide products have clearly higher solubility than that of corresponding materials without the treatment of the invention. The product contains a vegetable material formed by all of the grains or oat or rye or an oatbran concentrate, which has been crushed by extrusion to form particles of a size less than 100 $\mu$m, in which at least a major portion of the cells containing non-starch polysaccharides $\beta$-glucan or pentosan in the material has been damaged, the non-starch polysaccharides contained in the crushed particles having enhanced solubility and capacity to increase viscosity in an aqueous phase with which the product has been brought into contact. The damage of the cells has occurred without observable disintegration of the non-starch polysaccharide structure. Typical biological vegetable materials yielding fractions of physiological importance with regard to the non-starch polysaccharides comprise corns such as oat, barley and rye, for instance.

The material crushed into particles as described above is used in a food or a fodder, in which the non-starch polysaccharides have improved solubility in the digestive tract. The material is especially used for controlled increase of viscosity by means of soluble non-starch polysaccharides in different contexts.

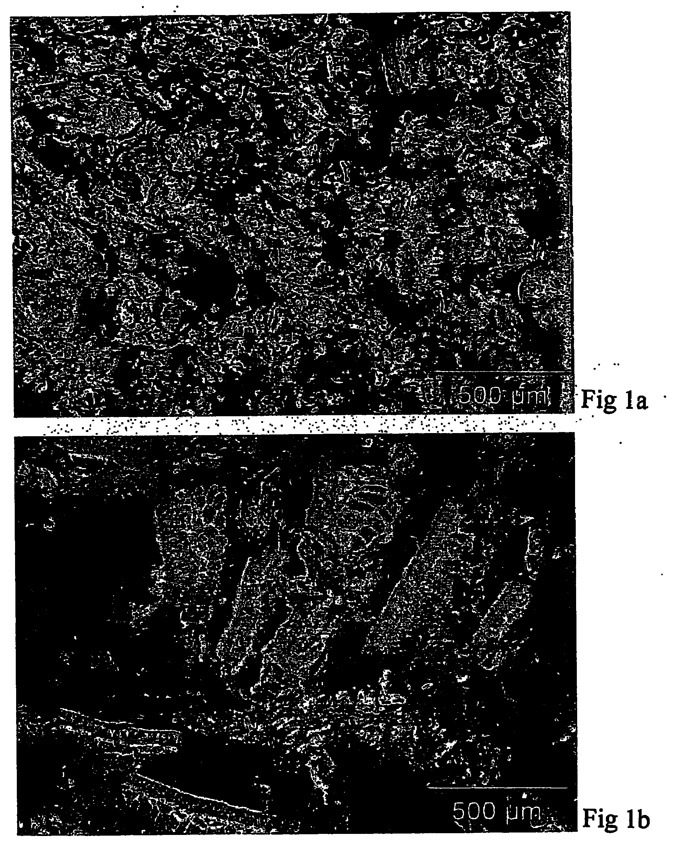

The invention is described in greater detail below by means of laboratory tests with reference to the related accompanying figure 1.

Figure 1 shows the effect of the amount of mechanical energy transferred to oat fibres during extrusion with respect to the disintegration of oat fibre cells. The upper figure 1a: the oat fibre is extruded with the amount of mechanical energy transfer being 0.364 kWh / kg. The lower figure 1b: oat fibres are extruded with the amount of mechanical energy transferred being 0.151 kWh / kg.

**Example 1**

Oat fibres (Oat Bran Concentrate, Suomen Viljava Oy) were extruded by means of an extruder model APV MPF 19/25 manufactured by K-Tron Ag. 95 % of the oat fibres were in the range 100 to 500 $\mu$m. The fibres also contained 17% of $\beta$-glucan calculated on its dry weight. The fibre feed rate, the rotation speed of the extruder screw and the torque were recorded and used for calculating the amount of specific energy kWh / kg transferred to the oat fibres under the following equation:

$$\text{Specific mechanical energy (SME, kWh/Kg)} =$$

$$\frac{\text{Screw rotation speed, rpm} * \text{torque (\%)}}{\text{Feed rate of fibres} + \text{water Kg/h}} * 0,004 kW / rpm$$

In this equation, 0.004 kW/rpm represents the constant term for this equipment.

A change of the extrusion circumstances allows adjustment of the amount of mechanical energy transferred to the oat fibres. The water quantity used in a normal extrusion process varies in the range 25 to 50%. Given the considerably smaller water quantity used in extrusion, mechanical energy will be transferred to the material in a greater amount than in a normal extrusion process. Optionally, the material can be extruded in two successive steps, so that a large amount of mechanical energy can be transferred to the material also with moistures normally used in extrusion (Table 1).

Table 1. Effect of extrusion circumstances on the amount of mechanical energy transferred to oat fibres.

| Feed rate of oat fibres, g / min | Moisture during extrusion, % | Screw speed, rpm | Temperature, °C | Specific mechanical energy, kWh / kg |
|---|---|---|---|---|
| 34.1 | 29 | 313 | 110 | 0.151 |
| 55.3 | 20 | 318 | 120 | 0.211 |
| 55.3 | 21 | 320 | 120 | 0.221 |
| 167*[a] | 31 | 318 | 109 | 0.237 |
| 55,3 | 13 | 322 | 121 | 0.267 |
| 123*[b] | 23 | 319 | 113 | 0.342 |
| 126*[c] | 22 | 319 | 110 | 0.364 |
| 126*[d] | 17 | 318 | 108 | 0.390 |

*) Product prepared by extruding oat fibres twice. The specific mechanical energy has been calculated by summing the energy transfers during the two extrusion steps.

[a] moisture during the first extrusion 29% [b] moisture during the first extrusion 20%

[c] moisture during the first extrusion 21% [d] moisture during the first extrusion 13%.

Figure 1 (enclosed) shows that transfer of mechanical energy to oat fibres in an amount of 0.390 kWh/kg resulted in a decrease of the particle size of the oat fibre to a size smaller than that of the cells contained in the fibre. When the amount of mechanical energy transferred to the oat fibre equalled the normal extrusion circumstances, 0.151 kWh/kg, the material was mainly present in the form of particles larger than the cell size. The figures thus show disintegration of the cell structures.

## Example 2

Extruded oat fibres prepared as in example 1 were mixed with water so that the mixtures containing oat fibres had a β-glucan concentration of 0.75 % in water mixtures. This mixture was incubated for 1 hour at a temperature of 37°C before the viscosity was measured. The viscosity was measured with an apparatus Bohlin Visco 88 BV manufactured by (Bohlin Rheology AB, Lund, Sweden) using a C-30 cylinder. The viscosity was measured at two different shearing speeds, 42 $s^{-1}$ and 72 $s^{-1}$. The viscosity was interpolated from these at a shearing speed of 58 $s^{-1}$. An increase of the viscosity was observed when the amount of used energy increased (table 2).

Table 2. Effect of the amount of mechanical energy transferred to oat fibres or rye flour during extrusion on the viscosity of an aqueous suspension of the products.

| Specific mechanical energy, kWh / kg | Viscosity of oat fibres, mPas |
|---|---|
| Untreated oat fibres | 302 |
| 0.151 | 413 |
| 0.211 | 515 |
| 0.221 | 518 |
| 0.237 | 504 |
| 0.267 | 500 |
| 0.342 | 598 |
| 0.364 | 570 |
| 0.390 | 571 |

## Example 3

Extruded products were prepared using the oat fibres mentioned in example 1 and commercially available rye flour. The extrusion was performed using an extruder model APV MPF 19/25 manufactured by Tron Ag and the mechanical energy transferred to the products was calculated as in example 1. Rye flour was extruded with two different energy amounts (table 3), the latter of which (0.301 kWh/kg) was used for further tests.

Table 3. Effect of extrusion circumstances on the amount of mechanical energy transferred to rye flour during extrusion.

| Rye flour feed rate, g / min | Moisture during extrusion, % | Screw speed, rpm | Temperature, °C | Specific mechanical energy, kWh / kg |
|---|---|---|---|---|
| 31 | 50 | 220 | 110 | 0.055 |
| 31 | 21 | 440 | 108 | 0.301 |

Water was added to the oat fibre and rye flour products described above to a dry matter content of 4.35%. The mixture was stirred for 1 hour at a temperature of 37°C. Then the liquid and the solid matter were separated from the mixture by centrifugation with a 3300 g effect for 10 minutes. Both the liquid and the solid matter phase were dried by cold drying and their β-glucan content was determined. The β-glucan determination was performed under the AOAC 995 method. The example indicated that a markedly greater portion of β-glucan was dissolved in the aqueous phase as a result of the treatment (table 4).

Table 4. Effect of extrusion on the proportion of β-glucan dissolved from oat fibres and rye flour in the overall β-glucan content.

| Treatment | Proportion of soluble β-glucan, % |
|---|---|
| Untreated oat fibre | 66 |
| Extruded oat fibre SME 0.342 kWh / kg** | 75 |
| Untreated rye flour | 20 |
| Extruded rye flour 0.301 kWh / kg** | 28 |

** Extruded with the amount of specific energy transferred to the oat fibre or the rye flour being 0.342 kWh / kg or 0,301 kWh / kg of fibres.

The samples were further treated as described in example 2, and were subsequently cold dried. The molecular size of the β-glucan contained in the dried samples was determined by gel permeation chromatography, as depicted in"Size-exclusion chromatographic determination of -glucan with postcolumn reaction detection" (Suortti T., Journal of Chromatography A, 1993, 632(1-2), pages 105-110). The example showed that the treatments did not affect the molecule size of β-glucan significantly (table 5).

Table 5. Effect of extrusion on the proportion of β-glucan dissolved from oat fibres and rye flour in the overall β-glucan content of the products.

| | MW > 1 000 000 D | 1 000 000 D< MW < 200 000 D | MW< 200 000 D |
|---|---|---|---|
| Untreated sample | 35% | 45% | 20% |
| Extruded SME 342 kWh / kg | 30% | 45% | 25% |

## Example 4

Oat fibres (Oat Bran Concentrate, Suomen Viljava Oy) were extruded with an APV MPF 19/25 model extruder manufactured by K-Tron Ag. According to the manufacturer, 95 % of the particles were in the range 100 to 500 $\mu$m. The fibre contained 17% of β-glucan calculated on the dry weight. Before extrusion, starch rich in amylopectin (REMYLINE XS-DR-P) was mixed with the oat fibres at a percentage of 15-25% of the oat fibre mass. The extrusion was performed at a 15 % moisture and at a temperature of 120°C.

It was observed that an increase of starch rich in amylopectin in oat fibres had only a minor impact on the amount of energy transferred to the material during extrusion (table 6). By contrast, the example indicated that the viscosity of the finished product in an aqueous solution, when measured as in example 2, changed markedly when the proportion of this particular starch in the product was increased. With the proportion of the added starch accounting for 25% of the amount of oat fibres, the product generated very low viscosity and the product maintained its particle-shaped structure in water for up to 60 minutes. The slurring of such particles in water could be enhanced markedly by treating the mixture with a solution of pancreatin (table 7). Hence, if desired, the generation of the viscosity of the invention can be adjusted so that the viscosity is generated in the process step that is most profitable in terms of the method of application, or not until the product gets into contact with food digestive enzymes.

Table 6. Effect of starch rich in amylopectin on the viscosity of a product prepared by extrusion from oat fibres in a 0.75 % water mixture. The viscosity measurements were made 15, 30, 45 and 60 minutes after the product had been mixed in water.

| Proportion of starch rich in amylopectin in oat fibres, % | SME, kWh/kg | Viscosity, mPas | | | |
|---|---|---|---|---|---|
| | | 15 min | 30 min | 45 min | 60 min |
| 15 | 0,144 | 170 | 281 | 318 | 333 |
| 20 | 0,142 | 79 | 87 | 110 | 139 |
| 25 | 0,151 | *) | 41 | 52 | 57 |

*) No viscosity to be measured

Table 7. Effect of starch rich in amylopectin on the viscosity of a product prepared by extrusion from oat fibres in a 0.75% water mixture. 8 mg of pancreatin / 100 ml of water had been added to the mixture. The viscosity measurements were made 15, 30, 45 and 60 minutes after the product had been mixed in water.

| Starch rich in amylopectin, % | SME, kWh/kg | Viscosity, mPas | | | |
|---|---|---|---|---|---|
| | | 15 min | 30 min | 45 min | 60 min |
| 15 | 0,144 | 282 | 386 | 440 | 472 |
| 20 | 0,142 | 250 | 368 | 403 | 451 |
| 25 | 0,151 | 242 | 350 | 407 | 460 |

## Claims

1. A method for treating a vegetable material formed by all of the grains of oat, rye or barley or an oat bran concentrate, with a view of improving the solubility of the non-starch polysaccharide $\beta$-glucan or pentosan contained in the material, **characterised in that** the material is crushed by extrusion with use of mechanical energy in an amount of 0.15 to 0.39 kWh/kg to a particle size less than 100 $\mu$m, at least a major portion of the cells containing non-starch polysaccharide in the material being damaged during crushing, to produce particles with an improved solubility of $\beta$-glucan or pentosan and a capacity to generate viscosity as the product is contacted with an aqueous phase.

2. A method as defined in claim 1, **characterised in that** at least a major portion of the non-starch polysaccharides contained in the cells end up in particles as produced by the crushing with a particle size smaller than that of the respective initial cell of the non-starch polysaccharide.

3. A method as defined in claim 1 or 2, **characterised in that** the material is crushed to a particle size less than 50 $\mu$m and advantageously less than 20 $\mu$m.

4. A method as defined in claim 3, **characterised in that** the material contains aleuron and/or subaleuron layers of grains, which are crushed to a particle size less than 50 $\mu$m, preferably less than 20 $\mu$m.

5. A method as defined in any of the preceding claims, **characterised in that** the mechanical energy is generated by the joint effect of heat, pressure and shearing forces.

6. A method as defined in any of the preceding claims, **characterised in that** the material to be crushed is pre-treated to moisture in the range from 6 to 20% .

**Patentansprüche**

1. Ein Verfahren zur Behandlung von einem Gemüsematerial, welches durch alle Körner von Hafer, Roggen oder Gerste oder ein Haferkleiekonzentrat gebildet wird, zum Verbessern der Löslichkeit der Nicht-Stärke-Polysaccharide β-Glucan oder Pentosan, welche in dem Material enthalten sind, **dadurch gekennzeichnet, dass** das Material durch Extrusion gemahlen wird mit einer mechanischen Energie in einer Menge von 0,15 bis 0,39 kWh/kg bis zu einer Teilchengröße von weniger als 100 μm, zumindest die Mehrzahl der Zellen, welche die Nicht-Stärke-Polysaccharide in dem Material enthalten, während dem Mahlprozess beschädigt werden, um Teilchen herzustellen mit einer verbesserten Löslichkeit von β-Glucan oder Pentosan und einer Fähigkeit, eine Viskosität bereitzustellen, wenn das Produkt in Kontakt gebracht wird mit einer wässrigen Phase.

2. Ein Verfahren wie in Anspruch 1 definiert, **dadurch gekennzeichnet, dass** mindestens ein Großteil der Nicht-Stärke-Polysaccharide, welche in den Zellen enthalten ist, in die Teilchen gelangen, welche durch das Mahlen mit einer Teilchengröße erhalten werden, welche geringer ist als diejenige der entsprechenden Anfangszelle des Nicht-Stärke-Polysaccharids.

3. Ein Verfahren wie in Anspruch 1 oder 2 definiert, **dadurch gekennzeichnet, dass** das Material gemahlen wird zu einer Partikelgröße, welche kleiner ist als 50 μm und weiter bevorzugt kleiner als 20 μm ist,

4. Ein Verfahren wie in Anspruch 3 definiert, **dadurch gekennzeichnet, dass** das Material Aleuron- und/oder Subaleuron-Schichten der Körner umfasst, welche gemahlen werden bis zu einer Partikelgröße von weniger als 50 μm, bevorzugt weniger als 20 μm.

5. Ein Verfahren wie in einem der vorherigen Ansprüche definiert, **dadurch gekennzeichnet, dass** die mechanische Energie bereitgestellt wird durch die gemeinsame Einwirkung von Wärme, Druck und Scherkräften.

6. Ein Verfahren wie in einem der vorherigen Ansprüche definiert, **dadurch gekennzeichnet, dass** das zu mahlende Material so vorbehandelt wird, dass die Feuchtigkeit in einem Bereich von 6 bis 20 % liegt.

**Revendications**

1. Procédé pour traiter une matière végétale formée par tous les grains d'avoine, de seigle ou d'orge ou un concentré de son d'avoine, en vue d'améliorer la solubilité du β-glucane ou pentosane de polysaccharide non amidon contenu dans la matière, **caractérisé par le fait que** la matière est broyée par extrusion à l'aide d'énergie mécanique en une quantité de 0,15 à 0,39 kWh/kg pour obtenir une grosseur de particules inférieure à 100 μm, au moins une majeure partie des cellules contenant du polysaccharide non amidon dans la matière étant endommagée pendant le broyage, pour produire des particules à solubilité de β-glucane ou pentosane améliorée et une capacité de générer une viscosité au fur et à mesure que le produit est mis en contact avec une phase aqueuse.

2. Procède selon la revendication 1, **caractérisé par le fait qu'**au moins une majeure partie des polysaccharides non amidon contenus dans les cellules termine par se retrouver dans les particules produites avec une grosseur de particule inférieure à celle de la cellule initiale respective du polysaccharide non amidon.

3. Procédé selon la revendication 1 ou 2, **caractérisé par le fait que** la matière est broyée à une grosseur de particule inférieure à 50 μm et, avantageusement, inférieure à 20 μm.

4. Procédé selon la revendication 3, **caractérisé par le fait que** la matière contient des couches aleurone et/ou subaleurone de grains qui sont broyés à une grosseur de particule inférieure à 50 μm, de préférence inférieure à 20 μm.

5. Procédé selon l'une quelconque des revendications, **caractérisé par le fait que** l'énergie mécanique est générée par l'effet conjoint de la chaleur, de la pression et des forces de cisaillement.

6. Procédé selon l'une quelconque des revendications, **caractérisé par le fait que** la matière à broyer est prétraitée avec de l'humidité de l'ordre de 6 à 20%.

Fig 1a

Fig 1b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5518710 A
- US 5846590 A
- US 6060519 A
- US 5552175 A
- EP 0377530 A2

### Non-patent literature cited in the description

- **Howarth N C ; Saltzman E ; Roberts S B.** Dietary fiber and weight regulation. *Nutrition Reviews,* 2001, vol. 59 (5), 129-139
- **Wood, Peter J.** Evaluation of oat bran as a soluble fiber source. Characterization of oat b-glucan and its effects on glycemic response. *Carbohydrate Polymers,* 1994, vol. 25 (4), 331-336
- **Braaten J T ; Wood P J ; Scott F W ; Wolynetz M S ; Lowe M K ; Bradley-White P ; Collins M W.** Oat beta-glucan reduces blood cholesterol concentration in hypercholesterolemic subjects. *European Journal Of Clinical Nutrition,* 1994, vol. 48 (7), 465-474
- **Reddy ; Bandaru S. ; Hirose ; Yoshinobu ; Cohen ; Leonard A. ; Simi ; Barbara ; Cooma ; Indrane.** Preventive potential of wheat bran fractions against experimental colon carcinogenesis: implications for human colon cancer prevention. *Cancer Research,* 2000, vol. 60 (17), 4792-4797
- Effects of oat gum on blood cholesterol levels in healthy young men. *European Journal Of Clinical Nutrition,* 1995, vol. 49 (7), 517-522
- **Zhang ; Decai ; Doehlert ; Douglas C. ; Moore ; Wayne R.** Factors affecting viscosity of slurries of oat groat flours. *Cereal Chemistry,* 1997, vol. 74 (6), 722-726
- **Wood, P. J. ; Siddiqui, I. R. ; Paton, D.** Extraction of high-viscosity gums from oats. *Cereal Chemistry,* 1978, vol. 55 (6), 1038-1049
- Oats Chemistry And Technology. American Association of Cereal Chemists, Eagan Press, 1986
- **Suortti T.** *Journal of Chromatography A,* 1993, vol. 632 (1-2), 105-110